(19) Europäisches Patentamt
European Patent Office
Office européen des brevets

(11) Numéro de publication : **0 114 005**
**B1**

(12) ## FASCICULE DE BREVET EUROPÉEN

(45) Date de publication du fascicule du brevet :
13.04.88

(51) Int. Cl.⁴ : **F 24 J 2/04**, F 24 D 11/00, F 24 D 17/00

(21) Numéro de dépôt : **83402104.0**

(22) Date de dépôt : **27.10.83**

(54) Installation pour la production et le stockage de chaleur.

(30) Priorité : 21.12.82 FR 8221453

(43) Date de publication de la demande :
25.07.84 Bulletin 84/30

(45) Mention de la délivrance du brevet :
13.04.88 Bulletin 88/15

(84) Etats contractants désignés :
AT BE CH DE FR GB IT LI LU NL SE

(56) Documents cités :
DE-A- 2 601 673
FR-A- 2 410 228
FR-A- 2 510 242
FR-A- 2 524 973
GB-A-  773 659
Solarthermische Heizungssysteme Solar energy
conversion , H. GRALLERT, R. Oldenbourg, Munich
Vienna 1978

(73) Titulaire : **COMPAGNIE FRANCAISE DE RAFFINAGE**
Société anonyme dite:
5, rue Michel-Ange
F-75781 Paris Cedex 16 (FR)

(72) Inventeur : **Barthez, Roland**
64, rue Denfert Rochereau
F-92100 Boulogne (FR)
Inventeur : **Boissonnet, Francisque**
11, rue Fauvet
F-75018 Paris (FR)
Inventeur : **Bogo, René**
11, rue des Chasses
F-92110 Clichy-la-Garenne (FR)

(74) Mandataire : **Jolly, Jean-Pierre et al**
Cabinet BROT et JOLLY 83, rue d'Amsterdam
F-75008 Paris (FR)

## Dèscription

La présente invention concerne une installation pour la production et le stockage de la chaleur récupérée à la sortie d'une source thermique produisant de la chaleur par intermittence.

Pour simplifier l'exposé de l'invention, on raisonnera ci-après uniquement dans le cas de l'application à l'énergie solaire.

On sait que les installations classiques de chauffage solaire comprennent généralement un ou plusieurs capteurs solaires destinés à transformer l'énergie du rayonnement solaire en chaleur, un circuit où circule un fluide caloporteur et qui relie le ou les capteur(s) au réservoir, une pompe faisant circuler le fluide dans ledit circuit et une unité de régulation différentielle reliée électriquement au moteur et à deux sondes qui sont respectivement montées sur les conduites aller et retour.

La sonde aller est habituellement disposée dans le réservoir même et la sonde retour sur la sortie des capteurs.

Cette unité de régulation est conçue pour que, lorsque la température mesurée à la sortie des capteurs dépasse celle mesurée dans la partie basse du réservoir de stockage de plus d'une valeur de consigne, elle donne un ordre de marche à la pompe, laquelle amène les calories du capteur dans le réservoir. Si, par contre, l'écart de température précédent descend en dessous d'une seconde valeur de consigne, l'unité de régulation interrompt la marche de la pompe.

Une telle installation fonctionne de façon satisfaisante mais son prix est relativement élevé, principalement en raison du coût de l'unité de régulation qui est généralement un appareil sophistiqué, et en raison des frais liés aux difficultés d'exécution des connexions électriques lors du montage de l'installation.

On connaît d'autre part une installation solaire qui ne comporte ni pompe de circulation, ni unité de régulation et dans laquelle la circulation du fluide caloporteur est assurée naturellement, par effet thermosiphon. Une telle installation est d'une grande simplicité, mais elle ne peut fonctionner que si les capteurs sont montés à proximité du réservoir de stockage et à un niveau inférieur à celui de ce dernier. De plus, lors du montage, on est astreint à donner aux canalisations du circuit du capteur, sur toute leur longueur, une pente minimale afin de ne pas entraver la circulation par thermosiphon du fluide caloporteur. Dans ce même but, on doit ajouter une purge pour éliminer les bulles d'air pouvant freiner la circulation du fluide. On comprend qu'il soit difficile en pratique de satisfaire à ces conditions, compte tenu du fait que l'on cherche au contraire à placer les capteurs le plus haut possible, par exemple sur les toitures ou les terrasses, afin de les dégager de toute projection d'ombre. De plus, les performances d'une installation à thermosiphon sont généralement inférieures à celles d'une installation de type classique en raison de l'absence de pompe. C'est pourquoi l'installation à thermosiphon est peu utilisée.

La Demanderesse a réussi à s'affranchir de pratiquement tous ces inconvénients en réalisant une installation de chauffage qui ne comporte pas d'unité de régulation. Cette installation, qui fait l'objet du brevet FR-A-2 524 973, comprend un ou plusieurs capteurs, un réservoir pour le stockage de la chaleur recueillie par les capteurs, un circuit reliant les capteurs et le réservoir, une pompe pour la mise en circulation du fluide caloporteur dans ledit circuit et, enfin, un déclencheur capable de commander le fonctionnement de la pompe à des moments fixés à l'avance, qui ne dépendent pas des températures régnant dans les capteurs et dans le réservoir de stockage, la zone d'échange de chaleur entre le circuit et le réservoir étant située dans le fond de ce dernier, dont elle n'occupe qu'une faible hauteur.

Le déclencheur est constitué soit par une horloge, soit par une pile photovoltaïque fixée au voisinage des capteurs, soit encore par la combinaison d'une résistance à grande inertie thermique qui entoure un court tronçon de la tubulure sortant du réservoir de stockage et d'une sonde de température détectant la température du fluide dans ledit tronçon.

Une telle installation est certes beaucoup plus simple et économique que les installations à régulation connues, et ses performances sont certainement supérieures à celles des installations à thermosiphon naturel, mais elle reste encore relativement chère en raison de l'utilisation du déclencheur, et surtout son montage est encore délicat, étant donné qu'il faut effectuer un raccordement électrique entre le déclencheur et le moteur de la pompe.

La présente invention concerne une installation pour la production et le stockage de la chaleur récupérée à la sortie d'une source produisant de la chaleur par intermittence, caractérisée en ce qu'elle comprend :

— un dispositif orienteur de l'écoulement d'un liquide caloporteur en fonction de la température dudit liquide, constitué par un corps creux tubulaire dont l'axe est disposé verticalement, et comprenant au moins un orifice d'entrée situé le long de sa longueur axiale, un orifice de sortie supérieur et un orifice de sortie inférieur situés respectivement dans les parties terminales supérieure et inférieure du corps tubulaire, tous ces orifices étant en·communication physique entre eux et ayant une section inférieure à celle du corps tubulaire,

— un réservoir de stockage de la chaleur monté à un niveau supérieur à celui du corps tubulaire,

— un circuit de source comprenant un conduit aller reliant ladite source de chaleur à l'orifice d'entrée du corps tubulaire et un conduit retour reliant l'orifice inférieur du corps tubulaire à ladite source,

— un circuit de réservoir comprenant un conduit d'entrée reliant l'orifice de sortie supérieur du corps tubulaire au réservoir et un conduit de sortie reliant le réservoir au conduit retour du circuit de source, et

— une pompe dans ledit circuit de source pour pomper le liquide caloporteur entre la source et le corps tubulaire, de sorte que ledit corps tubulaire peut d'une part, diriger l'écoulement du liquide propulsé par la pompe pour qu'il circule à travers les deux circuits à la fois en passant en série à travers la source thermique et le réservoir de stockage, peut d'autre part, faire circuler le liquide seulement à travers la source de chaleur, ou peut enfin diviser l'écoulement pour qu'il circule partiellement à travers les deux circuits et éviter partiellement le circuit de réservoir.

L'installation selon l'invention est donc susceptible, grâce au dispositif orienteur, de diriger (ou de partager) le flux du liquide caloporteur, mis en mouvement par la pompe, vers (ou entre) le réservoir de stockage et/ou le conduit retour du circuit de source, en fonction des températures respectives du liquide contenu dans ledit réservoir et celui arrivant de la source de chaleur. Ainsi, lorsque la température du liquide du réservoir est à une température inférieure à celle du liquide venant de la source, le dispositif dirige l'écoulement de ce dernier vers le réservoir, lequel s'échauffe progressivement. Dans le cas contraire, le dispositif orienteur recycle le liquide venant de la source vers cette dernière et isole ainsi le réservoir par rapport au liquide froid du circuit de source. Contrairement aux installations de chauffage connues, ce résultat est obtenu sans utilisation de dispositif de régulation de la température et en faisant fonctionner la pompe en permanence, ce qui est à priori surprenant. En effet, dans le cas des installations solaires classiques, il est admis par les constructeurs que, par temps couvert, il est indispensable d'arrêter le fonctionnement du moteur de la pompe sous peine de refroidir le réservoir.

Un autre avantage de l'installation selon l'invention réside dans le fait qu'elle ne comporte alors aucune connexion électrique, si ce n'est naturellement la prise de courant de la pompe. En effet, celle-ci n'est plus obligatoirement asservie à la température de la source et à celle du réservoir mais peut fonctionner en toute autonomie.

L'invention peut être appliquée à tous les cas où l'on désire récupérer la chaleur produite par une source de chaleur intermittente, par exemple à la sortie d'une centrale nucléaire, géothermique, ou thermique, ou à la sortie d'un dispositif de récupération de la chaleur à partir d'un foyer domestique, dans une installation de chauffage solaire (dans ce cas, la source est constituée par les capteurs solaires), ou encore à tout dispositif de chauffage par fluide caloporteur du même type que ceux pour lesquels on utilise, à l'heure actuelle, un thermostat différentiel.

Plusieurs modes de réalisation et d'utilisation de l'invention seront à présent décrits en détail, en regard des dessins annexés, dans lesquels :

La figure 1 représente un schéma de principe d'une installation de chauffage solaire équipée d'un dispositif orienteur selon un premier mode de réalisation, et montrant le trajet du liquide caloporteur lorsque la température des capteurs est supérieure à celle du réservoir ;

La figure 2 représente une installation de chauffage solaire équipée d'un dispositif orienteur selon un deuxième mode de réalisation, et montrant le trajet du liquide caloporteur lorsque la température des capteurs est inférieure à celle du réservoir ;

La figure 3 montre une installation analogue à celle de la figure 1 mais dans laquelle l'échange de chaleur se fait dans un échangeur thermique ; et

La figure 4 représente une variante de réalisation dans laquelle le dispositif orienteur est immergé dans le réservoir de stockage ;

Sur les figures, les références des éléments identiques ont les mêmes chiffres unitaires et un chiffre des dizaines qui est le numéro de la figure.

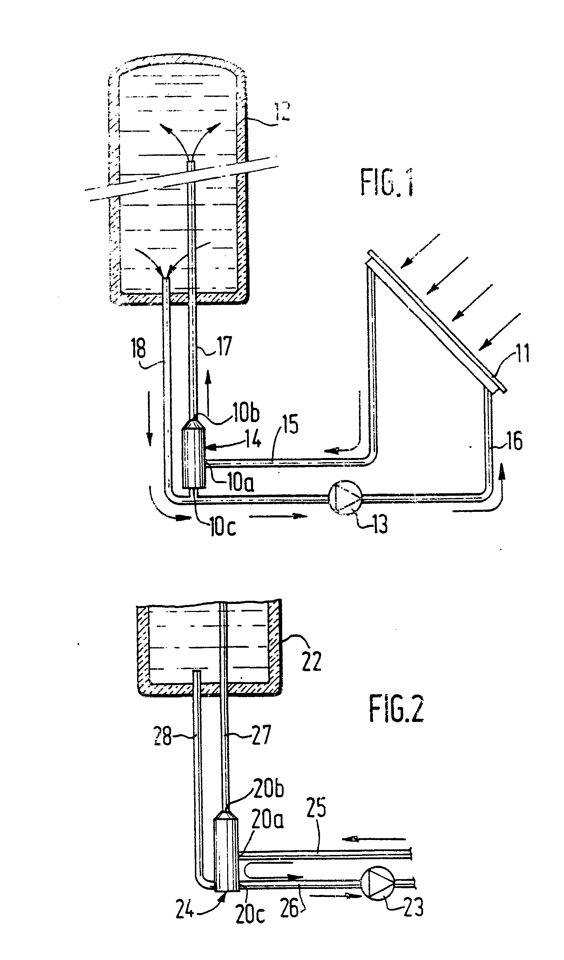

L'installation de production et de stockage de l'énergie solaire, représentée à la figure 1, comprend de façon connue en soi, un ou plusieurs capteurs d'énergie solaire 11, un réservoir de stockage 12 de type classique, destiné à stocker les calories recueillies par les capteurs, des conduites reliant les capteurs au réservoir et une pompe 13 pour faire circuler le fluide caloporteur dans lesdites conduites.

Selon la présente invention, entre les capteurs et le réservoir, est disposé un dispositif orienteur 14 sous la forme d'un corps tubulaire d'axe vertical, pourvu d'au moins trois orifices : un orifice d'entrée de fluide caloporteur 10a situé sensiblement à la partie médiane du corps et deux orifices de sortie de fluide caloporteur 10b et 10c respectivement situés à la partie supérieure et à la partie inférieure du corps tubulaire.

Comme le montre la figure 1, le corps tubulaire 14 est relié aux capteurs 11 par une conduite aller 15 raccordée à l'orifice d'entrée 10a et par une conduite retour 16 raccordée à l'orifice de sortie inférieur 10c. Ce corps tubulaire est également relié au réservoir 12 par une conduite aller 17 qui se raccorde à l'orifice de sortie supérieur 10b ; une conduite retour 18, dans cette première variante, n'est pas directement reliée au corps tubulaire mais à la conduite retour 16.

Selon une deuxième variante, telle que représentée à la figure 2, dans le corps tubulaire 24 débouchent quatre conduites, dont la conduite retour 28 du réservoir, qui débouche en sa partie inférieure de préférence en regard de l'orifice de sortie inférieur 20c.

Le principe de fonctionnement de cette installation peut alors être clairement exposé, en regard des figures 1 et 2 qui montrent également la circulation du fluide caloporteur, en fonction des températures respectives des capteurs et du réservoir.

3

La figure 1 montre le circuit emprunté par le fluide lorsque la température Tc des capteurs est supérieure à la température Tr du réservoir. Pratiquement, tout le fluide chaud qui arrive dans le corps 14 par la conduite aller 15 remonte le long de la conduite 17 jusqu'au réservoir 12. En effet, ce fluide ne peut descendre puisque celui qui se trouve à la partie inférieure du corps est plus dense, car à une température inférieure à celle du réservoir. La conduite d'entrée 17 débouche directement dans le réservoir 12 à un niveau généralement supérieur à celui de l'extrémité de la conduite de sortie 18, de façon à éviter le mélange entre le fluide chaud entrant dans ledit réservoir, et le fluide froid en sortant.

Ainsi, le fluide froid est prélevé au fond du réservoir ; il est amené par la conduite de sortie 18, puis refoulé par la pompe 13 jusqu'aux capteurs 11, où il se réchauffe et le cycle se poursuit ainsi.

La figure 2 montre le circuit emprunté par le fluide lorsque la température Tc des capteurs est inférieure à la température Tr du réservoir. Dans ce cas, le fluide froid qui arrive dans le corps 24, est plus dense que celui qui se trouve à la partie supérieure du corps. Il se dirige donc vers la partie inférieure du corps et retourne vers les capteurs 21 par la conduite retour 28, d'autant plus qu'il est aspiré par la pompe 23.

Ainsi, le corps tubulaire dirige le fluide qui arrive des capteurs, de façon tout à fait automatique, vers le réservoir lorsque les capteurs sont chauffés par le soleil, et en boucle fermée sur les capteurs, dans le cas contraire. Il se comporte donc comme une véritable vanne à trois voies. La commutation du fluide vers le réservoir ne s'effectue que lorsque le fluide entrant dans le corps tubulaire est plus chaud que celui qui s'y trouve, et donc lorsque les capteurs sont exposés au rayonnement solaire ; il y a donc réception d'énergie solaire au niveau des capteurs, et stockage de cette énergie au niveau du réservoir.

Par contre, la nuit ou par temps couvert, le système est bouclé sur les capteurs, sans échange avec le réservoir ; le moteur de la pompe peut donc fonctionner en permanence, sans qu'il soit nécessaire d'avoir un système coûteux de sondes thermométriques.

La fonction du corps tubulaire est bien du type commutateur, par analogie avec la terminologie d'un tel dispositif dans les systèmes électriques ou électroniques. Cette orientation du fluide caloporteur peut s'effectuer en « tout ou rien », mais également en « proportionnel » lorsque la différence entre les températures Tr et Tc n'est pas très importante. Le corps tubulaire a une fonction essentielle, celle d'éviter les turbulences du fluide d'entrée, qui, à ce niveau, doit choisir entre deux directions opposées. Pour équilibrer ce choix, on a choisi de faire déboucher l'orifice de la conduite entrée 15 en sa partie médiane. Mais, sans sortir du cadre de la présente invention, on peut également déplacer cet orifice le long d'une génératrice de façon à favoriser le passage dans le circuit réservoir ou inversement dans le circuit-capteurs. On peut également disposer l'orifice d'entrée de façon tangentielle par rapport au cercle de base dudit corps, de manière à créer une rotation du fluide lorsqu'il pénètre à l'intérieur du corps et ainsi favoriser les écoulements.

On peut également envisager plusieurs formes possibles pour ce corps (cylindrique, sphérique, ...) ou pour ses extrémités (plane, hémisphérique, tronconique, ...) sans pour cela sortir du cadre de la présente invention.

Dans une telle installation, si la circulation du fluide dans le circuit capteur s'effectue au moyen d'une pompe avec un débit imposé par celle-ci, la circulation dans le circuit réservoir s'effectue par thermosiphon. On peut exprimer la force de thermosiphon par la formule suivante :

$$\Delta P = (\rho_2 h_2 - \rho_1 h_1) g$$

dans laquelle :

$\rho_2$ est la masse volumique du fluide chaud

$\rho_1$ est la masse volumique du fluide froid

$h_2$ est la hauteur du fluide chaud, comptée à partir de la conduite d'entrée 15

$h_1$ est la hauteur du fluide froid

g est l'accélérateur de la pesanteur.

Ainsi, si l'on place la conduite d'entrée 15 en position médiane, par rapport au corps, la régulation est quasi neutre, aux pertes de charge près, alors que si on déplace cette conduite vers le bas ou le haut, on favorise ou non la circulation dans le circuit réservoir.

En outre, les pertes de charge dans un circuit, dans le domaine d'écoulement considéré (avec un nombre de Reynolds $\mathcal{R} > 2\,000$) s'expriment par la formule suivante :

$$\Delta \mathcal{J} = 6.10^{-6} \mu \frac{\dot{m}^{1,25}}{d^{2.5}} l$$

dans laquelle :

$\mu$ est la viscosité dynamique du fluide

m est le débit massique

l est la longueur du circuit

d est le diamètre du tube

4

Si l'on veut une régulation en tout ou rien, l'inégalité ci-après doit être vérifiée :

$$\Delta P \geqslant \Delta \cdot \mathfrak{f}$$

$$(\rho_2 \, h_2 - \rho_1 \, h_1) \, g \geqslant 6.10^{-6} \, \mu \, \frac{\dot{m}^{1.25}}{d^{2.5}} \, 1$$

Les masses volumiques $\rho_1$ et $\rho_2$ du fluide dépendent de la température $\theta_1$ du fluide froid à l'entrée des capteurs et $\theta_2$ du fluide chaud à la sortie des capteurs.

Il est donc nécessaire d'avoir un certain différentiel de température $(\theta_2 - \theta_1)$ pour que le thermosiphon s'amorce, et ce différentiel dépend très généralement de la forme et des dimensions des circuits ; on peut même préciser ici que deux différentiels de température peuvent être établis dans une telle installation, l'un sur le circuit réservoir dit différentiel de marche (au-delà d'une certaine différence de température, l'intégralité du fuide chaud passe dans le circuit réservoir), l'autre sur le circuit capteur et qui joue en fait le rôle d'un différentiel d'arrêt (ce qui signifie qu'en deçà d'une certaine différence de température, l'intégralité du fluide froid passe dans le circuit capteur).

Ceci n'est pas le seul paramètre de dimensionnement des circuits, mais un des principaux éléments de sa conception. Ainsi, chaque circuit est dimensionnable en fonction du débit à sélectionner.

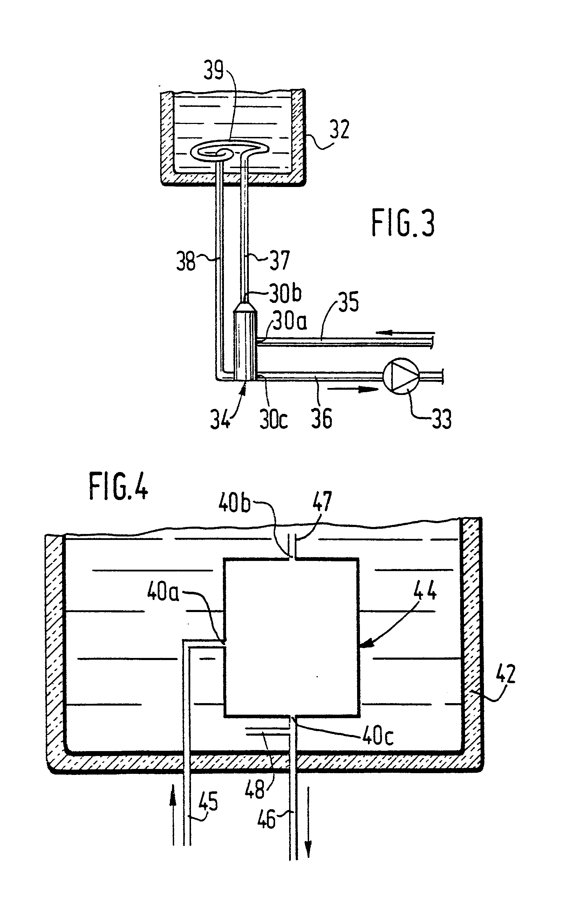

La figure 3 montre une installation analogue à celle de la figure 1, mais dans laquelle l'échange de chaleur au niveau du réservoir se fait dans un échangeur thermique 39, par exemple du type à enroulements. Cette installation est nécessaire lorsque le fluide qui circule dans les capteurs contient de l'antigel, alors que celui qui est stocké dans le réservoir 32 est utilisé à des fins sanitaires.

La figure 4 montre une variante de réalisation, lorsque le corps tubulaire 44 est immergé dans le réservoir de stockage 42 ; dans ce cas, les conduites qui étaient référencées 17 et 18 sur la figure 1 n'existent plus, mais sont remplacées par de simples tubulures d'entrée 47 et de sortie 48. Mais, la fonction de ce corps tubulaire reste identique du fait qu'elle permet d'éviter que du fluide froid en circulation permanente vienne refroidir le réservoir de stockage.

La description qui précède a été faite dans le cas d'une installation de chauffage solaire, mais elle reste entièrement valable, quelle que soit la source de chaleur et en particulier lorsque la source de chaleur fonctionne de façon intermittente et nécessite à l'heure actuelle l'utilisation de thermostats différentiels.

**Revendications**

1. Installation pour la production et le stockage de la chaleur récupérée à la sortie d'une source produisant de la chaleur par intermittence, caractérisée en ce qu'elle comprend :
— un dispositif orienteur de l'écoulement d'un liquide caloporteur en fonction de la température dudit liquide, constitué par un corps creux tubulaire (14 ; 24 ; 34 ; 44) dont l'axe longitudinal est disposé verticalement, et comprenant au moins un orifice d'entrée (10a ; 20a ; 30a ; 40a) situé le long de sa longueur axiale, un orifice de sortie supérieur (10b ; 20b ; 30b ; 40b) et un orifice de sortie inférieur (10c ; 20c ; 30c ; 40c) situés respectivement dans les parties terminales supérieure et inférieure du corps tubulaire, tous ces orifices étant en communication physique entre eux et ayant une section inférieure à celle du corps tubulaire,
— un réservoir de stockage de la chaleur (12, 22, 32, 42) monté à un niveau supérieur à celui du corps tubulaire,
— un circuit de source comprenant un conduit aller (15 ; 25 ; 35 ; 45) reliant ladite source de chaleur (11) à l'orifice d'entrée du corps tubulaire et un conduit retour (16 ; 26 ; 36 ; 46) reliant l'orifice inférieur du corps tubulaire à ladite source,
— un circuit de réservoir comprenant un conduit d'entrée (17 ; 27 ; 37 ; 47) reliant l'orifice de sortie supérieur du corps tubulaire au réservoir et un conduit de sortie (18 ; 28 ; 38 ; 48) reliant le réservoir au conduit retour du circuit de source, et
— une pompe (13 ; 23 ; 33 ; 43) dans ledit circuit de source pour pomper le liquide caloporteur entre la source et le corps tubulaire, de sorte que ledit corps tubulaire peut d'une part, diriger l'écoulement du liquide propulsé par la pompe pour qu'il circule à travers les deux circuits à la fois en passant en série à travers la source thermique et le réservoir de stockage, peut d'autre part faire circuler le liquide seulement à travers la source de chaleur, ou peut enfin diviser l'écoulement pour qu'il circule partiellement à travers les deux circuits et éviter partiellement le circuit de réservoir.

2. Installation selon la revendication 1, caractérisée en ce que l'orifice d'entrée (10a ; 20a ; 30a ; 40a) du corps tubulaire est situé pratiquement à mi-chemin le long de sa longueur axiale.

3. Installation selon la revendication 1, caractérisée en ce que l'orifice d'entrée du corps tubulaire est situé pratiquement à proximité de l'un des orifices de sortie, considéré dans la direction axiale du corps tubulaire.

4. Installation selon l'une des revendications 1 à 3, caractérisée en ce que le corps tubulaire est en forme de cylindre à base circulaire, et en ce que l'orifice d'entrée se raccorde tangentiellement par rapport à la paroi cylindrique de manière que le liquide entrant dans le corps s'écoule selon un mouvement tourbillonnaire non turbulent.

5. Installation selon la revendictation 4, caractérisée en ce que le conduit retour (28) du circuit du réservoir est relié à un orifice situé à la base du corps tubulaire, distinct de l'orifice de sortie inférieur (20c).

6. Installation selon la revendication 5, caractérisée en ce que le corps tubulaire (44) est monté à l'intérieur du réservoir (42) et en ce que les conduits aller (47) et retour (48) débouchent directement à l'intérieur du réservoir.

**Claims**

1. An installation for the production and storage of heat recovered at the outlet of a source which produces heat intermittently, characterised in that it comprises :
— a device for directing the flow of a heat-transfer liquid as a function of the temperature of said liquid, formed by a tubular hollow body (14 ; 24 ; 34 ; 44), the longitudinal axis of which is disposed vertically, ans comprising at least one inlet opening (10a ; 20a ; 30a ; 40a) situated along its axial length, an upper outlet opening (10b ; 20b ; 30b ; 40b) and a lower outlet opening (10c ; 20c ; 30c ; 40c) situated respectively in the top and bottom end portions of the tubular body, all these openings being in physical communication with one another and having smaller cross-section than that of the tubular body,
— a heat storage reservoir (12, 22, 32, 42) mounted at a level which is higher than that of the tubular body,
— a supply circuit comprising an outflow duct (15 ; 25 ; 35 ; 45) connecting said heat source (11) with the inlet opening of the tubular body and a return duct (16 ; 26 ; 36 ; 46) connecting the lower opening of the tubular body to said supply,
— a reservoir circuit comprising an inlet duct (17 ; 27 ; 37 ; 47) connecting the upper outlet opening of the tubular body to the reservoir and an outlet duct (18 ; 28 ; 38 ; 48) connecting the reservoir to the return duct of the supply circuit, and
— a pump (13 ; 23 ; 33 ; 43) in said supply circuit for pumping the heat-transfer liquid between the source and the tubular body in such a way that said tubular body can, on the one hand, direct the flow of liquid impelled by the pump, so that it circulates through the two circuits passing at the same time in series through the heat source and the storage reservoir, and can, on the other hand, cause the liquid to circulate only through the heat source, or can, finally, divide the flow so that it circulates partly through the two circuits and thus partly avoid the reservoir circuit.

2. Installation according to claim 1, characterised in that the inlet opening (10a ; 20a ; 30a ; 40a) of the tubular body is situated practically half way along its axial length.

3. Installation according to claim 1, characterised in that the inlet opening of the tubular body is situated practically in the vicinity of one of the outlet openings, viewed in the axial direction of the tubular body.

4. Installation according to any one of claims 1 to 3, characterised in that the tubular body is of cylindrical shape with a circular base, and in that the inlet orifice is joined tangentially with respect to the cylindrical wall in such a way that the liquid entering the body flows in a non-turbulent vortex motion.

5. Installation according to claim 4, characterised in that the return duct (28) of the reservoir circuit is connected to an opening situated at the base of the tubular body, separate from the lower outlet opening (20c).

6. Installation according to claim 5, characterised in that the tubular body (44) is disposed inside the reservoir (42) and in that the outflow duct (47) and return duct (48) discharge directly inside the reservoir.

**Patentansprüche**

1. Einrichtung zur Erzeugung und Speicherung von Wärme, welche am Ausgang einer mit Unterbrechungen Wärme erzeugenden Quelle gewonnen wird, dadurch gekennzeichnet, daß sie
— eine Orientierungseinrichtung für die Flußrichtung einer Wärmeträger-Flüssigkeit in Abhängigkeit der Temperatur dieser Flüssigkeit, wobei diese Einrichtung von einem rohrförmigen hohlen Körper (14, 24, 34, 44) gebildet wird, dessen Längsachse in vertikaler Richtung angeordnet ist und der wenigstens eine längs der Längsachse angeordnete Eintrittsöffnung (10a, 20a, 30a, 40a), eine obere Austrittsöffnung (10b, 20b, 30b, 40b) und eine untere Austrittsöffnung (10c, 20c, 30c, 40c), welche am oberen bzw. unteren Endabschnitt des rohrförmigen Körpers angeordnet sind, umfaßt, wobei die Öffnungen untereinander und mit einem unteren Abschnitt des rohrförmigen Körpers in physischer Verbindung steht,
— einen Wärmespeicherbehälter (12, 22, 32, 42), welcher auf einem gegenüber dem rohrförmigen Körper höheren Niveau angeordnet ist,
— einen Quellenkreislauf mit einer die Wärmequelle (11) mit der Eingangsöffnung des rohrförmigen

6

Körpers verbindenden Leitung (15, 25, 35, 45) und mit einer die untere Öffnung des rohrförmigen Körpers mit der Quelle verbindenden Rückführungsleitung (16, 26, 36, 46),
— einen Speicherkreislauf mit einer die obere Austrittsöffnung des rohrförmigen Körpers mit dem Behälter verbindenden Eintrittsleitung (17, 27, 37, 47) und mit einer den Behälter mit der Rückführungsleitung des Quellenkreislaufes verbindenden Austrittsleitung (18, 28, 38, 48), und
— eine Pumpe (13, 23, 33, 43) im Quellenkreislauf zum Pumpen der Wärmeträger-Flüssigkeit zwischen der Quelle und dem rohrförmigen Körper, so daß der rohrförmige Körper einerseits die Flußrichtung der durch die Pumpe gepumpten Flüssigkeit einstellen kann, daß die Flüssigkeit zugleich durch die zwei Kreisläufe durch aufeinanderfolgenden Durchtritt durch die Wärmequelle und den Speicherbehälter zirkuliert, oder daß der Körper andererseits die Flüssigkeit nur durch die Wärmequelle zirkulieren lassen kann, oder daß der Körper den Flüssigkeitsstrom aufteilen kann, so daß die Flüssigkeit teilweise durch beide Kreisläufe zirkulieren kann und teilweise den Speicherkreislauf umgehen kann, umfaßt.

2. Einrichtung nach Anspruch 1, dadurch gekennzeichnet, daß die Eintrittsöffnung (10a, 20a, 30a, 40a) des rohrförmigen Körpers im wesentlichen in der Mitte entlang seiner axialen Länge angeordnet ist.

3. Einrichtung nach Anspruch 1, dadurch gekennzeichnet, daß die Eintrittsöffnung des rohrförmigen Körpers im wesentlichen nahe einer der Austrittsöffnungen, in axialer Richtung des rohrförmigen Körpers gesehen, angeordnet ist.

4. Einrichtung nach einem der Ansprüche 1 bis 3, dadurch gekennzeichnet, daß der rohrförmige Körper zylinderförmig mit kreisförmiger Basis ausgebildet ist und daß die Eintrittsöffnung tangential an den Zylindermantel anschließt, so daß die in den Körper eintretende Flüssigkeit in einer turbulenzfreien Wirbelbewegung strömt.

5. Einrichtung nach Anspruch 4, dadurch gekennzeichnet, daß die Rückführungsleitung (28) des Speicherkreislaufes an eine an der Basis des rohrförmigen Körpers angeordnete und von der unteren Austrittsöffnung (20c) verschiedene Öffnung anschließt.

6. Einrichtung nach Anspruch 5, dadurch gekennzeichnet, daß der rohrförmige Körper (44) im Inneren des Behälters (42) angeordnet ist und daß die Zuführungsleitung (47) und die Rückführungsleitung (48) direkt in das Innere des Behälters münden.

FIG.1

FIG.2

FIG.3

FIG.4